# EUROPEAN PATENT SPECIFICATION

(11) **EP 4 266 858 B1**
(45) Date of publication and mention of the grant of the patent: **20.05.2026**
(21) Application number: 21801167.4
(22) Date of filing: 07.10.2021
(51) Int. Cl.: A01B 71/04, A01D 34/82, F16C 13/02, F16C 33/66, F16C 19/49, F16C 35/063, F16C 35/067

(54) **ROLLER FOR USE IN AN AGRICULTURAL OR MOWING MACHINE, AND AN AGRICULTURAL OR MOWING MACHINE COMPRISING THE ROLLER**
WALZE ZUR VERWENDUNG IN EINER LANDWIRTSCHAFTLICHEN ODER MÄHMASCHINE UND LANDWIRTSCHAFTLICHE ODER MÄHMASCHINE MIT DER WALZE
ROULEAU DESTINÉ À ÊTRE UTILISÉ DANS UNE MACHINE AGRICOLE OU DE FAUCHAGE, ET MACHINE AGRICOLE OU DE FAUCHAGE COMPRENANT LE ROULEAU

(30) Priority: 23.12.2020 GB 202020457
(43) Date of publication of application: 01.11.2023
(73) Proprietor: Wessex International Machinery, East Portway Industrial Estate Andover Hampshire SP10 3QN (GB)
(72) Inventor: BROWNING, Charles Edmund, Hampshire SP10 3QN (GB); WILLS, Paul Edward, Hampshire SP10 3QN (GB); WOLFENDEN, Roy David, Hampshire SP10 3QN (GB); HORSFIELD, Jack Antony James, Hampshire SP10 3QN (GB)
(74) Representative: Murgitroyd & Company
(86) International application number: PCT/GB2021/052587
(87) International publication number: WO 2022/136820

(56) References cited:
- DE-A1- 102010 008 434
- DE-C1- 10 156 890
- FR-A- 317 742
- FR-A1- 2 751 709
- US-A1- 2010 115 908
- US-A1- 2018 291 961

## Description

### Field of the Invention

The present disclosure relates to a roller for use in an agricultural or mowing machine wherein the roller comprises a pair of tapered roller bearings and a pair of roller bearings. The present disclosure also relates to an agricultural or mowing machine including the roller.

### Background to the Invention

Agricultural and mowing machines often include rollers to ease the movement of the machines across the ground. Rollers are especially desirable in mowing machines, as they are helpful in the production of aesthetically pleasing lawn stripes during the mowing process.

During operation of an agricultural or mowing machine, the rollers rotate at a relatively high speed as they traverse the ground. Additionally, as they contact the ground and support much of the weight of the machine, the rollers often experience high lateral and vertical loads. These loads can be caused by impacts during use of the machine, undulating terrain, torsional stresses on the machine, lateral forces when the machine turns a corner and other unexpected forces. The size, frequency, and unpredictability of these forces can lead to the premature failure or seizing of the rollers within the machine. Any roller failure is problematic as it requires repair, resulting in machine downtime and increased costs.

Additionally, in large scale machines, a user may not realise a roller is broken for some time, creating potential for the machine to become further damaged due to extra strain on other areas of the machine, or for work to be completed with the machine at a low standard.

FR 317742 relates to an anti-friction roller bearing.

US 2018/291961 relates to an industrial mower sealed roller bearing system.

The present invention seeks to address at least the above problems.

### Summary of the Invention

According to a first aspect of the present invention there is provided an agricultural or mowing machine roller, the roller comprising a pair of tapered roller bearings and a pair of roller bearings, wherein the normal to the internal surfaces of the races of each tapered roller bearing are at an angle to the longitudinal axis of the roller and wherein the normal to the internal surfaces of the races of each roller bearing are substantially perpendicular to the longitudinal axis of the roller, wherein the tapered roller bearings are closer to the midpoint of the roller than the roller bearings.

In this way, a roller is provided that is more resilient to the forces and impacts experienced during its use. The inclusion of the roller bearings increases the roller's ability to withstand loads perpendicular to the longitudinal axis of the roller, whereas the tapered roller bearings improve the roller's ability to resist impacts and loads with a component parallel to the longitudinal axis of the roller. Additionally, positioning the tapered roller bearings closer to the midpoint of the roller than the roller bearings reduces the lateral forces experienced by the roller bearings. As such, the combination of bearings and their positions may provide a more resilient roller.

The roller bearings are bearings where the normals to the internal surfaces of the races of the bearing are substantially perpendicular to the longitudinal axis of the roller. A roller bearing may comprise cylindrical bearings or ball bearings. Additionally, self-aligning forms of such bearings should be considered to be within the scope of this term.

The tapered roller bearings are bearings where the normals to the internal surfaces of the races of the bearing are at an angle to the longitudinal axis of the roller. A tapered roller bearing may comprise conical bearings. Additionally, self-aligning forms of such bearings should be considered to be within the scope of this term.

Preferably, the roller bearing comprises ball bearings. Preferably, the roller bearing comprises cylindrical bearings. Preferably, the roller bearing is self-aligning.

Preferably, the tapered roller bearing comprises conical bearings. Preferably, the tapered roller bearing comprises cylindrical bearings. Preferably, the tapered roller bearing is self-aligning.

Preferably, the tapered roller bearings comprise inner and outer raceways, wherein the inner and outer raceways of each tapered roller bearing taper, narrow or decrease in cross section in the direction of the midpoint of the roller. Positioning and orienting the taper roller bearings in this manner may increase the ability of the roller to withstand lateral loads in use.

Preferably, the roller comprises a pair of spacer elements, each spacer element intermediate one of the tapered roller bearings and one of the roller bearings. A spacer positioned between the two bearings reduce friction within the roller. Additionally, the use of a spacer element may increase the longevity of the bearings.

More preferably, each spacer element abuts one of the tapered roller bearings and one of the roller bearings. Where the spacer element abuts a bearing, this may be advantageous in reducing the movement of the bearings within the roller and mitigating the damaging effects of any unexpected forces experienced.

Preferably, each roller bearing is substantially at an end of the roller. Such a configuration may be most effective in mitigating the effect of any unexpected vertical loads on the reliability and operation of the roller.

Preferably, the roller is substantially symmetrical. More preferably, the roller is entirely symmetrical.

Preferably, the pair of tapered roller bearings are removable. Preferably, the pair of roller bearings are removable. More preferably, both the pair of tapered roller bearings and the pair of roller bearings are removable. In such configurations, one or more of the bearings may be replaced easily if required, reducing the cost and time associated with repairing the roller.

According to a second aspect of the present invention there is provided an agricultural or mowing machine comprising the roller as hereinbefore described, a body portion, and a fixing pin that extends through the body portion, at least one tapered roller bearing and at least one roller bearing.

In this way, the advantages of the roller hereinbefore described are provided in an agricultural or mowing machine.

Preferably, the fixing pin of the machine extends through an aperture in the body portion. Where the fixing pin extends through an aperture in the body portion, this may allow the fixing pin to be removed and inserted easily in use. As such, the roller may also be removed and inserted easily into the machine. Such a feature may also, advantageously, render it easier for a user to check the quality and condition of the roller bearings and/or tapered roller bearings after a number of uses. Finally, such a feature may advantageously ensure that each bearing or spacer is easily replaced without necessitating complex tools or replacing the roller as a whole.

Preferably, the aperture and the fixing pin comprise complementary threads. Complementary threads may assist in securing the fixing pin in the aperture.

Preferably, the fixing pin comprises a bolt head. Preferably, the fixing pin comprises a recess sized to accommodate an allen key. Preferably, the fixing pin comprises a recess sized to accomodate a screwdriver or torx head.

The fixing pin of the present inventions is suitably formed from stainless steel, or carbonised steel, or an alloy, or a combination thereof.

Preferably, the fixing pin of the machine further comprises a lubricant channel extending from an exterior surface of the fixing pin to at least one of the tapered roller bearing and/or the roller bearing. Such a feature may be advantageous as it may allow one or more of the bearings to be lubricated for use without removal of the roller or disassembly of the machine.

Preferably, the channel is suitable for the passage of a detergent. It may be preferably for a detergent to be used to remove any dirt or debris between the components.

Preferably, each lubricant channel further comprises a lubricant reservoir. The presence of a lubricant reservoir may be advantageous as it may allow at least one bearing to be continuously lubricated.

Preferably, the pair of tapered roller bearings and the pair of roller bearings are located within the external perimeter of the body portion.

Preferably, when in use, the roller of the machine is in substantially continuous contact with the ground.

Preferably, the apparatus is a mowing machine. More preferably, the apparatus is a mower deck.

### Detailed Description of the Invention

An embodiment of the present invention will now be described by way of example only and with reference to the accompanying drawings, in which:
Figure 1 illustrates a conventional mower deck comprising a roller;
Figure 2 illustrates a roller of the present invention;
Figure 3 illustrates an expanded view of the portion of the roller comprising the tapered roller bearing, spacer, roller bearing and fixing pin; and
Figure 4 illustrates a cross sectional view of the dissembled components of the roller.

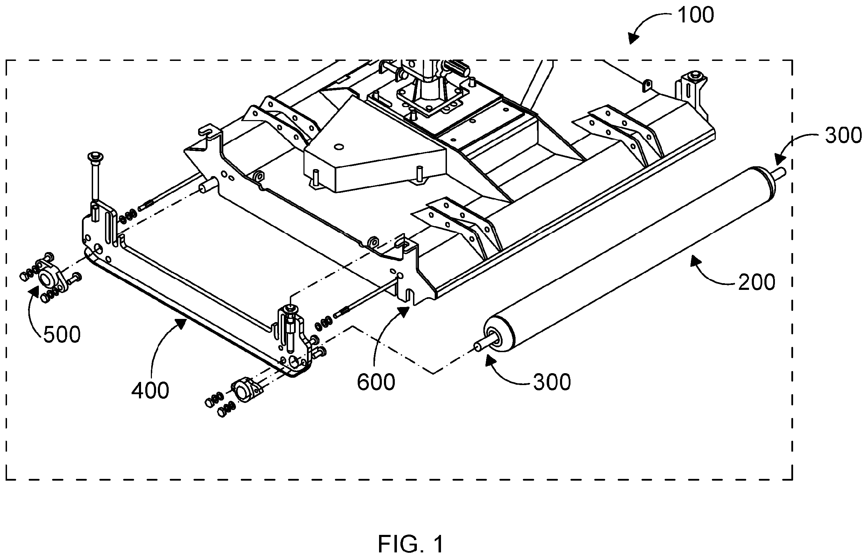

Turning first to Figure 1, there is illustrated a conventional mower deck 100 comprising a roller 200 positioned at the front of the mower deck 100. A second roller (not shown) is positioned at the rear of the mover deck 100. As shown, the roller 200 comprises a pin 300 on either side dimensioned to fit in to a slot 600 on the body of the mower deck 100. The side plate or side skid 400 is fixed to the side of the mower deck 100, and a ball bearing unit 500 is positioned on the external face of the side plate 400 and held in place using bolts. In this way, the roller 200 is free to rotate during use of the mower deck 100 as it is rotatably connected to the mower deck 100 by the ball bearing unit 500.

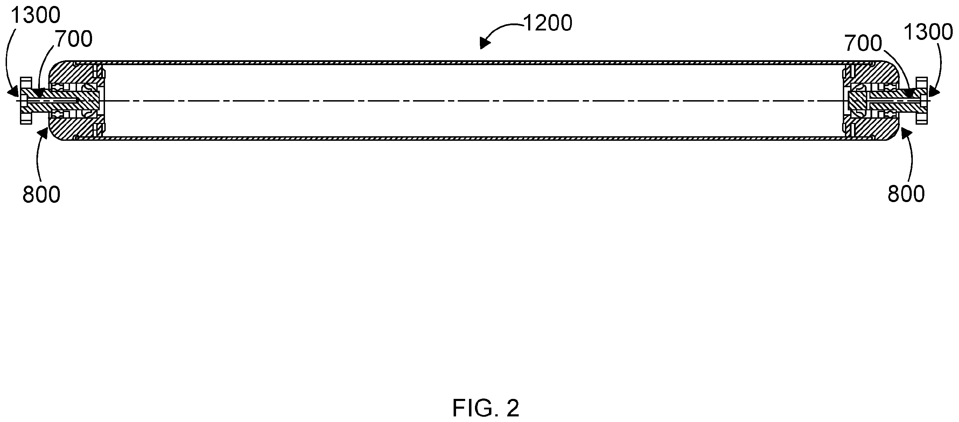

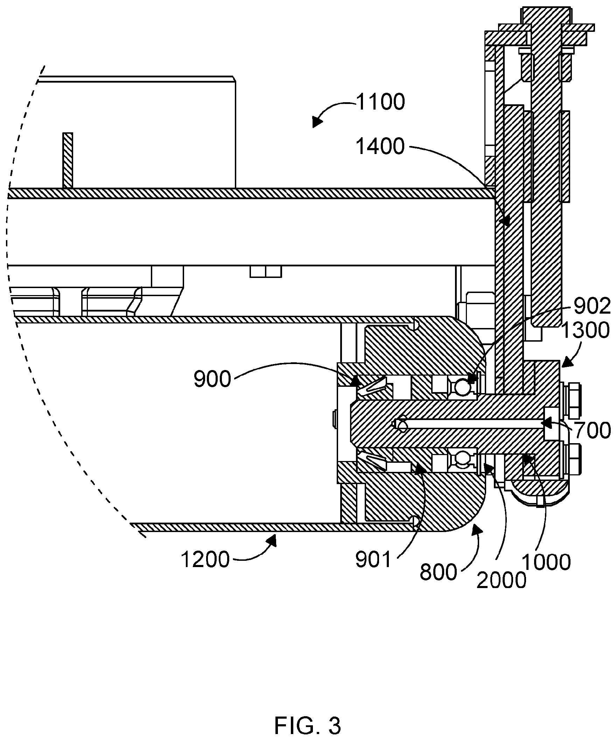

Referring to Figure 2, there is illustrated a roller 1200 of the present invention. The roller 1200 comprises an elongate body portion that, in use, is located at the front and rear of a mower deck (Figure 3, 1100). Furthermore, the roller 1200 comprises an elongate tube that, in use, extends along the width of the mower deck 1100, in a similar fashion to the conventional roller depicted in Figure 1. Symmetrically positioned on either end of the roller 1200 are bearing compartments 800 and fixing pins 1300. In the illustrated embodiment, each fixing pin 1300 further comprises a lubricant channel 700 disposed within it.

Turning to Figure 3, the end of a roller 1200 is depicted in detail. Here, it can be seen that the bearing compartment 800 houses a tapered roller bearing 900, a spacer 901, a roller bearing 902. Additionally, it is possible to see the interaction of these components with the fixing pin 1300. The bearing compartment 800 provides a casing that envelopes and encloses each of the tapered roller bearing 900, the spacer 901 and the roller bearing 902.

Unlike Figure 1, the roller 1200 of Figure 3 does not contain a pin that is integral to the roller 1200, nor is there a ball bearing situated external to the side plate 1400. Herein, the roller 1200 is positioned underneath the mower deck 1100. As shown, the fixing pin 1300 protrudes outwards and away from the side plate 1400.

The tapered roller bearing 900, spacer 901, and the roller bearing 902 are located towards an end of the roller 1200. The roller bearing 902, spacer 901 and tapered roller bearing 902 are positioned such that they define a common aperture with a single longitudinal axis. The roller bearing 902 is located such that it abuts the interior surface of the end of the roller 1200, with the spacer 901 located inside and abutting the roller bearing 902 and the tapered roller bearing 900 located inside and abutting the spacer 901. As such, the spacer 901 is intermediate the roller bearing 902 and the tapered roller bearing 900.

The fixing pin 1300 is inserted through the tapered roller bearing 900, the spacer 901 and the roller bearing 902, holding these three components together and in contact with one another. As such, the fixing pin 1300 holds the tapered roller bearing 900, the spacer 901 and the roller bearing 902 in compression.

The fixing pin 1300 comprises a distal end and a proximal end. An elongate body separates the two ends of the fixing pin 1300. The distal end is suitably shaped to cooperate with an aperture 2000 in the end of the roller 1200. In use, this aperture 2000 aligns with the common aperture defined by the roller bearing 902, spacer 901 and tapered roller bearing 90.

As shown in Figure 3, the distal end of the fixing pin 1300 may be terminated by a flat base or a shape that is suitable to align with the internal wall of the roller 1200. The proximal end is terminated by a flat circumferential edge that extends laterally outwards from the elongate body of the fixing pin 1300. A portion of the proximal end and the elongate body of the fixing pin 1300 protrude from the aperture 2000 when positioned therein, to form a collar. In particular, the collar provides an area within which the slide plate 1400 is accommodated.

The side plate 1400 comprises an aperture 1000 through which the fixing pin 1300 may be inserted and into the aperture 2000 of the roller 1200. Though the term side plate 1400 is used, it may alternatively be referred to as a side skid. The two terms are interchangeable.

Once each component, tapered roller bearing 900, spacer 901, and the roller bearing 902, is positioned as required within the roller 1200, the fixing pin 1300 is inserted through the aperture 2000 in the side plate 1400 and into the roller 1200 via aperture 2000 to locate and hold each component the tapered roller bearing 900, spacer 901, roller bearing 902, as discussed above.

Furthermore, the proximal end of the fixing pin 1300 further comprises a plurality of smaller holes or smaller apertures 1301 and 1302. Some of these apertures 1301 or 1302 may be threaded such that when a screw is threaded through these apertures a force is exerted against the side plate pushing the pin out and away from the mower deck 1100. Alternatively, some of the apertures 1301 or 1302 may be plain such that these contain no internal threads. In this instance, these apertures 1301 or 1302 are utilised for receiving a securing pin to secure the fixing pin 1300 to the side plate and mower deck 1100.

The number of holes or apertures 1301 and 1302 can be greater than 3, or greater than 5. Simply put the number of holes or apertures 1301 and 1302 will be dependent on the size and shape of the fixing pin.

As is further illustrated in Figure 3, the fixing means 1300 comprises a lubricant channel 700 extending along the longitudinal axis of the fixing pin 1300.

The width of the lubricant channel 700 is smaller than the width of the fixing pin 1300. The width of the channel 700 should be such that it does not interfere with the function of the fixing pin 1300 yet is sufficient to allow a lubricant to pass through. Furthermore, the channel 700 is centrally disposed within the fixing pin 1300.

The lubricant channel 700 comprises a distal end and a proximal end. The two ends of the channel 700 are separated by an elongate portion. The channel 700 further comprises a plurality of openings, a first proximal opening located at the proximal end of the fixing pin, and a second or more distal openings located near to the distal end of the fixing pin 1300. Herein the first proximal opening is housed within the proximal end of the fixing pin 1300. The first proximal opening is adapted to receive a lubricant. The second or more distal openings comprise outlets to distribute the lubricant within the roller.

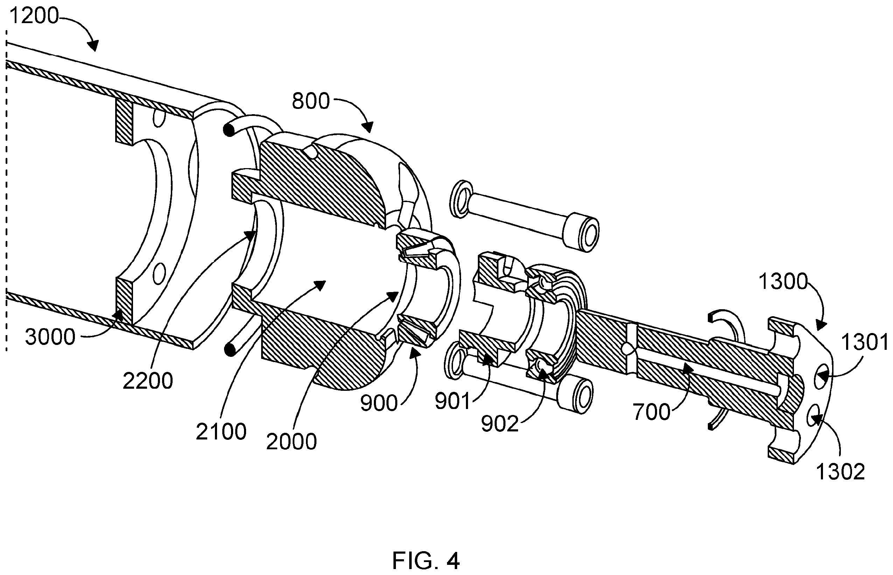

Figure 4 illustrates a cross-sectional view of the dissembled portion of the roller comprising all the aforementioned parts of the roller 1200. As illustrated herein, the aforementioned parts are assembled near the end of the elongate body of the roller 1200. The peripheral edge of the roller 1200 comprises a circular fixture 3000 on to which the bearing compartment 800 comprising the aperture 2000 is affixed.

The circular fixture 3000 is a plate comprising of a series of mating holes to securely mate with the bearing compartment 800. An O-ring is positioned between the circular fixture 3000 and the bearing compartment 800 to provide a tight seal.

As shown, the aperture 2000 leads to a cavity 2100 within the bearing compartment 800. The cavity 2100 extends along the length of the bearing compartment 800 and is suitable for housing each of the tapered roller bearing 900, spacer 901, ball bearing 902, and a portion of the fixing pin 1300. The cavity 2100 envelops the tapered roller bearing 900, spacer 901, roller bearing 902 and a portion of the fixing pin 1300, and is sized to ensure that there is minimal gap, or preferably, no gap between the components.

On the opposing side of the cavity 2100 is a further aperture 2200 dimensioned of an equal circumference as the aperture 2000. The aperture 2200 is terminated by a lip portion to keep the tapered roller bearing 900, spacer 901 and ball bearing 902within the cavity 2100.

The rollers or bearings of the tapered roller bearing 900 are frustoconical shapes tightly arranged circumferentially around the races of the tapered roller bearing 900. Each frustoconical shape tapers towards the lip portion of the cavity 2100.

The spacer 901 is positioned adjacent to the tapered roller bearing 900. The spacer 901 comprises a central, cylindrical aperture and has the cross section of a ring. The horizontal width of the spacer 901 can be varied to ensure that no gap or a minimal gap remains within the cavity 2100 when the tapered roller bearing 900, the spacer 901 and the roller bearing 902 are in position.

The roller bearing 902 comprises a ring shape. The roller bearing 902 comprises a number of spherical balls, or ball bearings, arranged within the cavity formed between the two races of the roller bearing 902. As such, in this embodiment, the roller bearing is a ball bearing.

Once the tapered roller bearing 900, spacer 901 and roller bearing 902 are arranged within the cavity, the fixing pin 1300 simply slides through the aperture 2000, the tapered roller bearing 900, the spacer 901 and the roller bearing 902 into the cavity 2100 until it abuts the lip of the cavity. If required, the fixing pin 1300 is then further secured to the machine.

Furthermore, as illustrated the lubricant channel 700 is an integral part of the fixing pin 1300. As illustrated, the channel 700 extends through at least three quarters of the length of the fixing pin 1300.

As shown the distal end of the channel 700 comprises a T-shape to form a plurality of holes for dispensing a lubricant into the cavity 2100 to lubricate the tapered roller bearing 900 and the roller bearing 902. The proximal end of the channel 700 comprises an inlet port or opening through which the lubricant can be injected. The opening may be capped when not in use to prevent dirt or debris ingress.

## Claims

1. An agricultural or mowing machine (1100) roller (1200), said roller (1200) comprising a pair of tapered roller bearings (900) and a pair of roller bearings (902),
wherein the normal to the internal surfaces of the races of each tapered roller bearing (900) are at an angle to the longitudinal axis of the roller (1200) and wherein the normal to the internal surfaces of the races of each roller bearing (902) are substantially perpendicular to the longitudinal axis of the roller (1200);
wherein said tapered roller bearings (900) are closer to the midpoint of said roller than said roller bearings.

2. The roller (1200) of claim 1, wherein said tapered roller bearings (900) comprise inner and outer raceways, and further wherein the inner and outer raceways of each tapered roller bearing (900) taper in the direction of the midpoint of said roller (1200).

3. The roller (1200) of claim 1 or claim 2, wherein said roller (1200) comprises a pair of spacer elements (901), each spacer element (901) intermediate one of the tapered roller bearings (900) and one of the roller bearings (902), preferably, wherein each said spacer element (901) abuts one of the tapered roller bearings (900) and one of the roller bearings (902).

4. The roller (1200) of any one preceding claim, wherein each roller bearing (902) is substantially at an end of the roller (1200), preferably, wherein said roller (1200) is substantially symmetrical.

5. The roller (1200) of any one preceding claim, wherein said pair of tapered roller bearing (900) are removable, preferably, wherein said pair of roller bearings (902) are removable.

6. An agricultural or mowing machine (1100), said machine (1100) comprising:
the roller (1200) of any one preceding claim
a body portion; and
a fixing pin (1300) that extends through (2000) said body portion, at least one of the tapered roller bearings (900) and at least one roller bearings (902).

7. The machine (1100) of claim 6, wherein said fixing pin (1300) extends through an aperture (2000) in said body portion.

8. The machine (1100) of claim 7, wherein said aperture (2000) and said fixing pin (1300) comprise complementary threads.

9. The machine (1100) of claim 7 or claim 8, wherein said fixing pin (1300) comprises a bolt head.

10. The machine (1100) of any one of claims 6 to 9, wherein said fixing pin (1300) further comprises a lubricant channel (700) extending from an exterior surface of said fixing pin (1300) to at least one of said tapered roller bearing (900) and/or said roller bearing (902).

11. The machine (1100) of claim 10, wherein each said lubricant channel (700) further comprises a lubricant reservoir.

12. The machine (1100) of any one of claims 6 to 11, wherein said machine (1100) comprises a pair of fixing pins (1300), each fixing pin (1300) extending through said body portion, at least one tapered roller bearing (900) and at least one roller bearing (902).

13. The machine (1100) of any one of claims 6 to 12, wherein said pair of tapered roller bearings (900) and said pair of roller bearings (902) are located within the external perimeter of said body portion.

14. The machine (1100) of any one of claims 6 to 13, wherein, in use, said roller (1200) is arranged to be in substantially continuous contact with the ground.

15. The machine (1100) of any one of claims 6 to 14, wherein said machine (1100) is a mowing machine, preferably, wherein said machine is a mower deck.

## Patentansprüche

1. Eine Walze (1200) einer Landwirtschafts- oder Mähmaschine (1100), wobei die Walze (1200) ein Paar Kegelrollenlager (900) und ein Paar Rollenlager (902) beinhaltet, wobei die Normalen zu den Innenflächen der Laufringe jedes Kegelrollenlagers (900) in einem Winkel zur Längsachse der Walze (1200) stehen und wobei die Normalen zu den Innenflächen der Laufringe jedes Rollenlagers (902) im Wesentlichen senkrecht zur Längsachse der Walze (1200) stehen;
wobei die Kegelrollenlager (900) näher am Mittelpunkt der Walze liegen als die Rollenlager.

2. Walze (1200) gemäß Anspruch 1, wobei die Kegelrollenlager (900) eine innere und eine äußere Laufbahn beinhalten und wobei sich ferner die innere und die äußere Laufbahn jedes Kegelrollenlagers (900) in Richtung des Mittelpunkts der Walze (1200) verjüngen.

3. Walze (1200) gemäß Anspruch 1 oder Anspruch 2, wobei die Walze (1200) ein Paar Abstandselemente (901) beinhaltet, wobei sich jedes Abstandselement (901) zwischen einem der Kegelrollenlager (900) und einem der Rollenlager (902) befindet, wobei vorzugsweise jedes Abstandselement (901) an einem der Kegelrollenlager (900) und einem der Rollenlager (902) anliegt.

4. Walze (1200) gemäß einem der vorhergehenden Ansprüche, wobei sich jedes Rollenlager (902) im Wesentlichen an einem Ende der Walze (1200) befindet, wobei vorzugsweise die Walze (1200) im Wesentlichen symmetrisch ist.

5. Walze (1200) gemäß einem der vorhergehenden Ansprüche, wobei das Paar Kegelrollenlager (900) entfernbar ist, wobei vorzugsweise das Paar Rollenlager (902) entfernbar ist.

6. Eine Landwirtschafts- oder Mähmaschine (1100), wobei die Maschine (1100) Folgendes beinhaltet:
die Walze (1200) gemäß einem der vorhergehenden Ansprüche,
einen Körperabschnitt; und
einen Befestigungsstift (1300), der sich durch (2000) den Körperabschnitt, mindestens eines der Kegelrollenlager (900) und mindestens ein Rollenlager (902) erstreckt.

7. Maschine (1100) gemäß Anspruch 6, wobei sich der Befestigungsstift (1300) durch eine Öffnung (2000) in dem Körperabschnitt erstreckt.

8. Maschine (1100) gemäß Anspruch 7, wobei die Öffnung (2000) und der Befestigungsstift (1300) komplementäre Gewinde beinhalten.

9. Maschine (1100) gemäß Anspruch 7 oder Anspruch 8, wobei der Befestigungsstift (1300) einen Schraubenkopf beinhaltet.

10. Maschine (1100) gemäß einem der Ansprüche 6 bis 9, wobei der Befestigungsstift (1300) ferner einen Schmiermittelkanal (700) beinhaltet, der sich von einer Außenfläche des Befestigungsstifts (1300) zu mindestens einem des Kegelrollenlagers (900) und/oder des Rollenlagers (902) erstreckt.

11. Maschine (1100) gemäß Anspruch 10, wobei jeder Schmiermittelkanal (700) ferner ein Schmiermittelreservoir beinhaltet.

12. Maschine (1100) gemäß einem der Ansprüche 6 bis 11, wobei die Maschine (1100) ein Paar Befestigungsstifte (1300) beinhaltet, wobei sich jeder Befestigungsstift (1300) durch den Körperabschnitt, mindestens ein Kegelrollenlager (900) und mindestens ein Rollenlager (902) erstreckt.

13. Maschine (1100) gemäß einem der Ansprüche 6 bis 12, wobei sich das Paar Kegelrollenlager (900) und das Paar Rollenlager (902) innerhalb des Außenumfangs des Körperabschnitts befinden.

14. Maschine (1100) gemäß einem der Ansprüche 6 bis 13, wobei die Walze (1200) im Gebrauch so angeordnet ist, dass sie im Wesentlichen kontinuierlich mit dem Boden in Kontakt steht.

15. Maschine (1100) gemäß einem der Ansprüche 6 bis 14, wobei die Maschine (1100) eine Mähmaschine ist, wobei die Maschine vorzugsweise ein Mähwerk ist.

## Revendications

1. Un rouleau (1200) de machine agricole ou de fauchage (1100), ledit rouleau (1200) comprenant une paire de roulements à rouleaux coniques (900) et une paire de roulements à rouleaux (902),
où la normale aux surfaces internes des bagues de chaque roulement à rouleaux coniques (900) est à un angle par rapport à l'axe longitudinal du rouleau (1200) et où la normale aux surfaces internes des bagues de chaque roulement à rouleaux (902) est substantiellement perpendiculaire à l'axe longitudinal du rouleau (1200) ;
où lesdits roulements à rouleaux coniques (900) sont plus proches du point central dudit rouleau que lesdits roulements à rouleaux.

2. Le rouleau (1200) de la revendication 1, où lesdits roulements à rouleaux coniques (900) comprennent des chemins de roulement intérieur et extérieur, et en outre où les chemins de roulement intérieur et extérieur de chaque roulement à rouleaux coniques (900) s'effilent dans la direction du point central dudit rouleau (1200).

3. Le rouleau (1200) de la revendication 1 ou de la revendication 2, où ledit rouleau (1200) comprend une paire d'éléments espaceurs (901), chaque élément espaceur (901) étant intermédiaire entre l'un des roulements à rouleaux coniques (900) et l'un des roulements à rouleaux (902), de préférence, où chaque dit élément espaceur (901) vient en butée contre l'un des roulements à rouleaux coniques (900) et l'un des roulements à rouleaux (902).

4. Le rouleau (1200) d'une quelconque revendication précédente, où chaque roulement à rouleaux (902) est substantiellement au niveau d'une extrémité du rouleau (1200), de préférence, où ledit rouleau (1200) est substantiellement symétrique.

5. Le rouleau (1200) d'une quelconque revendication précédente, où ladite paire de roulements à rouleaux coniques (900) est amovible, de préférence, où ladite paire de roulements à rouleaux (902) est amovible.

6. Une machine agricole ou de fauchage (1100), ladite machine (1100) comprenant :
le rouleau (1200) d'une quelconque revendication précédente,
une portion formant corps ; et
un taquet de fixation (1300) qui s'étend à travers (2000) ladite portion formant corps, au moins l'un des roulements à rouleaux coniques (900) et au moins un roulement à rouleaux (902).

7. La machine (1100) de la revendication 6, où ledit taquet de fixation (1300) s'étend à travers une ouverture (2000) dans ladite portion formant corps.

8. La machine (1100) de la revendication 7, où ladite ouverture (2000) et ledit taquet de fixation (1300) comprennent des filetages complémentaires.

9. La machine (1100) de la revendication 7 ou de la revendication 8, où ledit taquet de fixation (1300) comprend une tête de boulon.

10. La machine (1100) de l'une quelconque des revendications 6 à 9, où ledit taquet de fixation (1300) comprend en outre un canal de lubrifiant (700) s'étendant d'une surface extérieure dudit taquet de fixation (1300) à au moins l'un dudit roulement à rouleaux coniques (900) et/ou dudit roulement à rouleaux (902).

11. La machine (1100) de la revendication 10, où chaque dit canal de lubrifiant (700) comprend en outre un réservoir de lubrifiant.

12. La machine (1100) de l'une quelconque des revendications 6 à 11, où ladite machine (1100) comprend une paire de taquets de fixation (1300), chaque taquet de fixation (1300) s'étendant à travers ladite portion formant corps, au moins un roulement à rouleaux coniques (900) et au moins un roulement à rouleaux (902).

13. La machine (1100) de l'une quelconque des revendications 6 à 12, où ladite paire de roulements à rouleaux coniques (900) et ladite paire de roulements à rouleaux (902) sont situées à l'intérieur du périmètre externe de ladite portion formant corps.

14. La machine (1100) de l'une quelconque des revendications 6 à 13, où, lors de l'utilisation, ledit rouleau (1200) est agencé pour être en contact substantiellement continu avec le sol.

15. La machine (1100) de l'une quelconque des revendications 6 à 14, où ladite machine (1100) est une machine de fauchage, de préférence, où ladite machine est un châssis de faucheuse.
